**Europäisches Patentamt**

**European Patent Office**

**Office européen des brevets**

(19)

(11) Veröffentlichungsnummer: **0 373 170 B1**

## (12) EUROPÄISCHE PATENTSCHRIFT

(45) Veröffentlichungstag der Patentschrift:
**23.10.91 Patentblatt 91/43**

(51) Int. Cl.$^5$: **G07C 5/08**

(21) Anmeldenummer: **88904490.5**

(22) Anmeldetag: **02.06.88**

(86) Internationale Anmeldenummer:
**PCT/DE88/00324**

(87) Internationale Veröffentlichungsnummer:
**WO 88/09976 15.12.88 Gazette 88/27**

(54) **EINRICHTUNG ZUM SCHUTZ DER AGGREGATE UND DER LADUNG VON KRAFTFAHRZEUGEN.**

(30) Priorität: **02.06.87 DE 3718471**

(43) Veröffentlichungstag der Anmeldung:
**20.06.90 Patentblatt 90/25**

(45) Bekanntmachung des Hinweises auf die
Patenterteilung:
**23.10.91 Patentblatt 91/43**

(84) Benannte Vertragsstaaten:
**AT BE CH DE FR GB IT LI NL SE**

(56) Entgegenhaltungen:
**EP-A- 0 231 155**
**EP-A-00 720 00**
**DE-A- 2 610 621**
**GB-A- 2 016 701**
**US-A- 4 088 980**

(56) Entgegenhaltungen:
**US-A- 4 136 329**
**US-A- 4 376 227**
**Electronic Design,volume 15, 19 July 1978**
**(Hasbrouck Heights, US), J.McDermott: UP**
**and UC-based control systems cut engine pol-**
**lution, up mileage,pages 20-26, see the whole**
**document**

(73) Patentinhaber: **BREIT, Christoph**
**Höcherbergstrasse 147**
**W-6652 Bexbach/Saar (DE)**

(72) Erfinder: **BREIT, Christoph**
**Höcherbergstrasse 147**
**W-6652 Bexbach/Saar (DE)**

(74) Vertreter: **Vièl, Georg, Dipl.-Ing.**
**Patentanwalt Weinbergweg 15**
**W-6600 Saarbrücken (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zum Schutz der Aggregate und der Ladung von Kraftfahrzeugen, wobei eine automatische überwachung von Betriebszuständen erfolgt, bei der die von Meßfühlern gelieferten Informationen elektronisch aufgearbeitet und zur Beeinflussung einer Konsequenzsteuerung zugeleitet werden, und bei der die Meßfühler als in den Reifen des Kraftfahrzeugs frei bewegliche Kugel mit Funkschnittstelle zum Melden der gemessenen Werte an das Kraftfahrzeug oder eine zentrale Leitstelle ausgebildet sind.

Funktionsstörungen in der Betriebsweise des Motors, der Bremsen und anderer Aggregate bei Kraftfahrzeugen müssen schnell erkannt und behoben werden. Geschieht das nicht, so sind insbesondere bei Kraftfahrzeugen mit relativ großen (Antriebs-) Aggregaten, kostspielige Reparaturen erforderlich oder Aggregate (Motor, Bremsen etc.) werden unbrauchbar und müssen ausgetauscht werden.

Es sind die verschiedensten Vorschläge gemacht worden, um Funktionsstörungen bei Kraftfahrzeugen zu melden, anzuzeigen bzw. Warneinrichtungen vorzusehen (US-A-4 136 329, DE-OS 35 10 321, DE-OS 35 16 802, EP-PS 0 005 436). Die meisten bekannten Einrichtungen ermöglichen zwar ein Erfassen von Fehlerzuständen in einem Kraftfahrzeug, sie überlassen es aber dem Fahrer, zur Behebung der Fehler die geeigneten schritte in die Wege zu leiten, was in vielen Fällen unterbleibt und letztlich zur Zerstörung von Motor, Bremsen, Kühlkreislauf etc. führt.

Aus DE-A-2 610 621 ist ein Verfahren und eine Vorrichtung zur Funkmessung des Drucks in einem Reifen mit den Merkmalen des Oberbegriffs des Anspruchs 1 bekannt. Dabei sind Meßfühler als in den Reifen des Kraftfahrzeugs als frei bewegliche Kugeln mit Funkschnittstelle zum Melden der gemessenen Werte an das Kraftfahrzeug oder eine zentrale Leitstelle ausgebildet. Damit kann nur ein Meßwert (Reifendruck) vermittelt werden, und der Aufwand dafür ist relativ hoch.

Ein weiteres Problem ist der Schutz bzw. die überwachung der Ladung von Kraftfahrzeugen, insbesondere von Lastkraftwagen. Dabei ist in erster Linie an den Diebstahlschutz und die Ladungsüberwachung gedacht, letztere vor allem bei Transportfahrzeugen für Chemikalien, Tanklastzüge etc., was vor allem im Hinblick auf die Verkehrssicherheit von Wichtigkeit ist.

Der Erfindung liegt die Aufgabe zugrunde, bei Kraftfahrzeugen wesentliche Aggregate und die Ladung wirksam zu überwachen und zu schützen.

Diese Aufgabe wird erfindungsgemäß dadurch gelöst, daß die kugelförmigen Meßfühler einen Außenmantel aufweisen, in dem unter Zwischenschaltung von Rollen eine Innenkugel drehbar gelagert ist, daß an der Außenfläche des Außenmantels eine Druck-Temperatur-Meßfolie angebracht und die Innenseite des Außenmantels mit einer elektrisch leitenden Schicht versehen ist, die mit der Druck-Temperatur-Meßfolie in Kontakt steht, daß die Innenkugel ein Gegengewicht aufweist und daß zur übermittlung der für Reifendruck, Temperatur und Eigenbewegung gemessenen Werte über Funk ein Signalverarbeitungsteil vorgesehen ist, dem Spulen sowie über den Umfang des Außenmantels verteilte Magnetkörper zugeordnet sind.

Nach einer weiteren Ausbildung der Erfindung ist vorgesehen, daß mit Hilfe der gemessenen und über Funk gesendeten Werte eine Fahrtenbuchsteuerung, eine Zufuhrunterbrechungs-Steuerung für die Startfreigabe und Notabschaltung, eine Anzeigesteuerung und eine Alarmanlagesteuerung auslösbar ist.

Eine andere Ausbildung der Erfindung besteht darin, daß mittelbar über den Reifendruck das Gewicht der Ladung des Kraftfahrzeugs kontrollierbar und eine Konsequenzsteuerung beeinflußbar ist.

Eine Ausbildung der Erfindung hat weiterhin zum Gegenstand, daß mittelbar über die Reifentemperatur die Funktion der Bremsen kontrollierbar und eine Konsequenzsteuerung beeinflußbar ist.

Erfindungsgemäß kann auch vorgesehen sein, daß über die Eigenbewegung des kugelförmigen Fühlers eine Diebstahlssicherung des Kraftfahrzeugs steuerbar ist.

Die mit der Erfindung erzielten Vorteile bestehen insbesondere in einer erheblichen Senkung der Betriebskosten durch konsequenten, gesteuerten Aggregatschutz, eine Erhöhung der Verkehrssicherheit durch permanente Ladungsüberwachung und einem Diebstahlschutz für Fahrzeug und vor allem der Ladung und permanente überwachung von Reifendruck- und -bewegung.

Die Erfindung wird anhand von Ausführungsbeispielen näher erläutert, die in den Zeichnungen dargestellt sind.

Es zeigen

Fig. 1 das Blockschaltbild der neuen Einrichtung,

Fig. 2 ein Teil der übewachungs- und Steuerschaltung (Berechtigungsüberwachung),

Fig. 3 ein weiterer Teil, die Aggregat-Vorwärmeüberwachung,

Fig. 4 die Schaltung eines kugelförmigen Fühlers für die Reifen,

Fig. 5 eine Bremsfunktions-überwachungsschaltung,

Fig. 6 die Schaltung zur Ladungs- und Reifendrucküberwachung,

Fig. 7 die Überwachungsschaltung für die Zündung und die Lichtmaschine,

Fig. 8 Kennlinien für den Betrieb eines Motors,

Fig. 9 schematisch den Kühlkreislauf eines Motors,

Fig. 10 die Schaltung zur Kontrolle und Steuerung der Abgasqualität,

Fig. 11 die prinzipielle Anordnung von Meßfühlern in der Auspuffanlage,

Fig. 12 eine besondere Anordnung der Meßfühler für die Ermittlung der Abgasqualität,

Fig. 13 verschiedene Möglichkeiten für die Überwachung von Aggregaten in einem Kraftfahrzeug,

Fig. 14 schematisch das Kühlsystem eines Motors,

Fig. 15 einen Deckel mit Einsatz für einen Kühler,

Fig. 16 die Möglichkeiten einer Fahrtenbuchsteuerung mit Konsequenzauswertung,

Fig. 17 eine Variante zu Fig. 4,

Fig. 18 den kugelförmigen Fühler im Detail,

Fig. 19 die Anordnung der Spulen im kugelförmigen Fühler,

Fig. 20 eine Variante zu Fig. 10 und

Fig. 21 die Draufsicht zu Fig. 12.

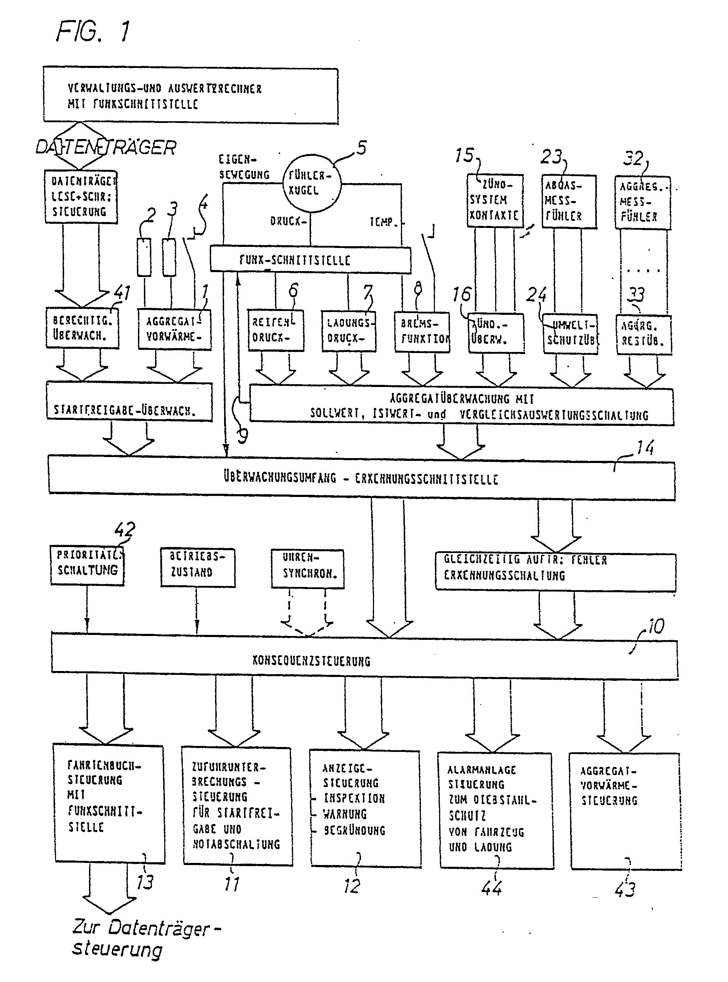

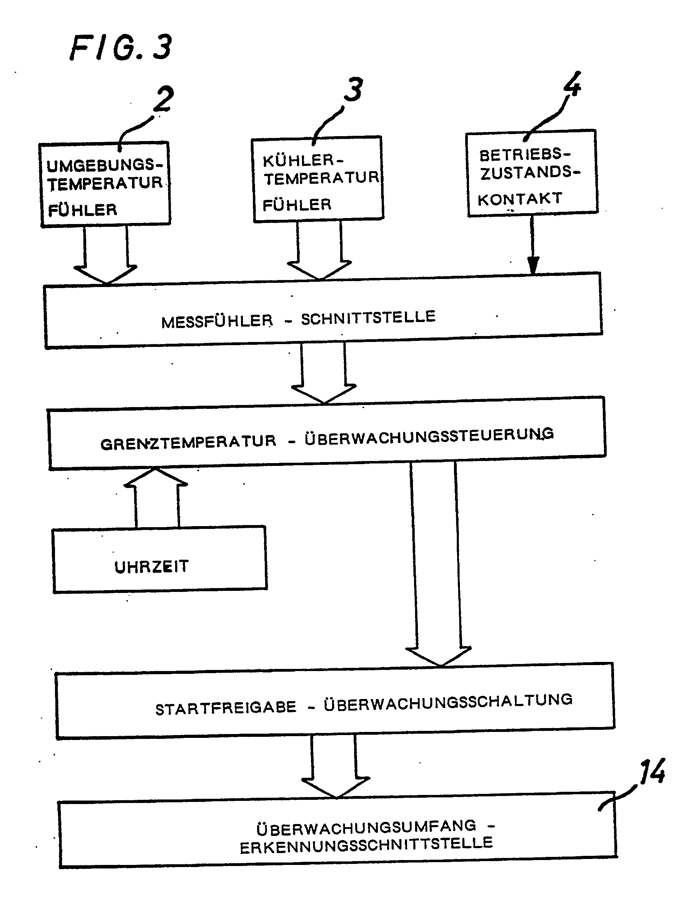

Fig. 1 zeigt das Blockschaltbild einer bevorzugten Ausführung der erfindungsgemäßen Einrichtung zum Schutz der Aggregate und der Ladung von Kraftfahrzeugzen. Zum schonenden Betrieb der Aggregate, insbesondere des Antriebs/Motors, von Kraftfahrzeugen gehört - vor allem in der kalten Jahreszeit - eine Aggregat-Vorwärmung 1 bzw. 43, wie sie detaillierter in Fig. 3 dargestellt ist: Zwei Fühler 2 und 3 sind vorgesehen, um die Umgebungstemperatur und die Kühlwassertemperatur zu ermitteln. Mit dem Schalter 4 wird die Vorwärmeüberwachung bzw. die Vorwärmung selbst in Betrieb gesetzt, was letztlich gemäß dem in Fig. 1 und 3 gezeigten Ablauf erst zur Startfreigabe führt.

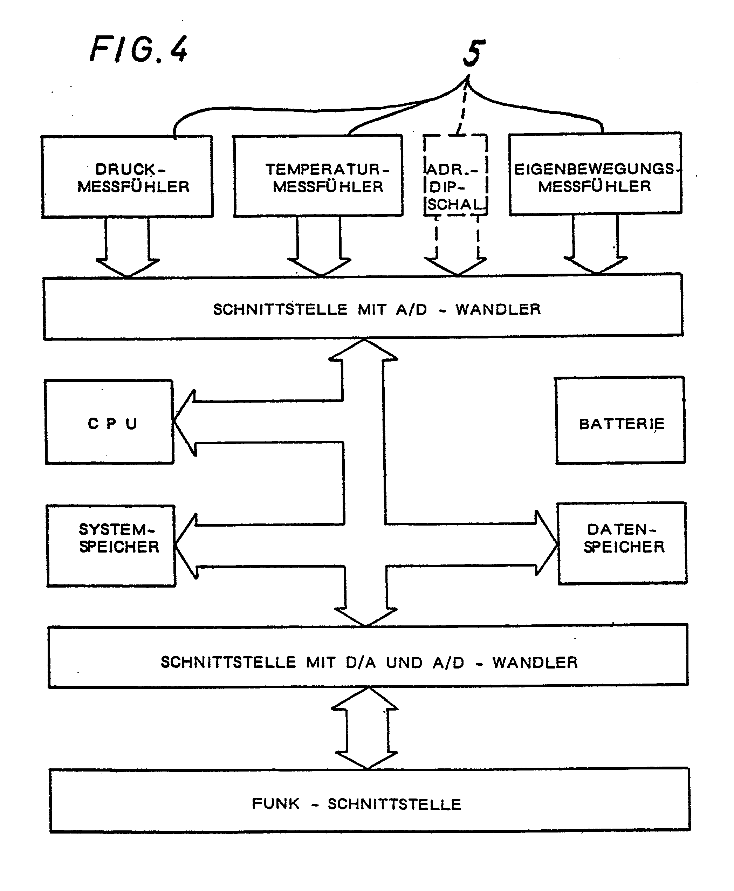

Ein wesentlicher Bestandteil der neuen Einrichtung ist der Fühler 5, dessen Blockschaltbild in Fig. 4 dargestellt ist. Dieser Fühler 5 ist als Kugel ausgebildet un,d befindet sich - frei beweglich - in den Reifen des Kraftfahrzeugs, insbesondere eines Lastkraftwagens. Der als Kugel ausgebildete Fühler 5 liefert drei Informationen, die über Funk an die dazugehörigen überwachungseinrichtungen 6, 7 und 8 übermittelt werden: mit dem Fühler 5 wird der Reifendruck und die Temperatur im Reifen festgestellt sowie eine Information über seine Eigenbewegung an die galvanisch getrennte, nachgeschaltete Empfangseinrichtung gesendet.

Ist über die Leitung 9 "Sendeaufforderung" das Überwachungssystem mit dem Fühler 5 in Betrieb gesetzt, so können mit Hilfe der besagten Informationen permanent der Reifendruck und die Bremsfunktion überwacht werden. Mittelbar über den Reifendruck kann das Gewicht der Zuladung ständig überwacht werden, was sowohl für den Transport besonderer Güter (Chemikalien, Heizöl, Benzin) von Wichtigkeit ist wie auch als Alarmanlagen-Steuerung zum Diebstahlschutz des Fahrzeugs und der Ladung.

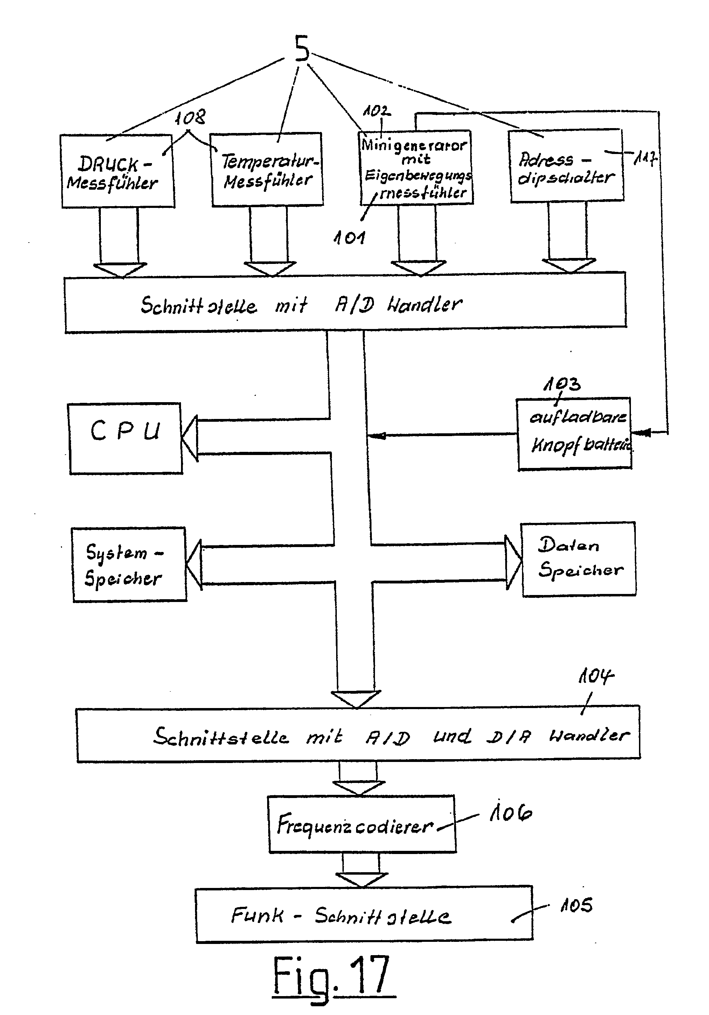

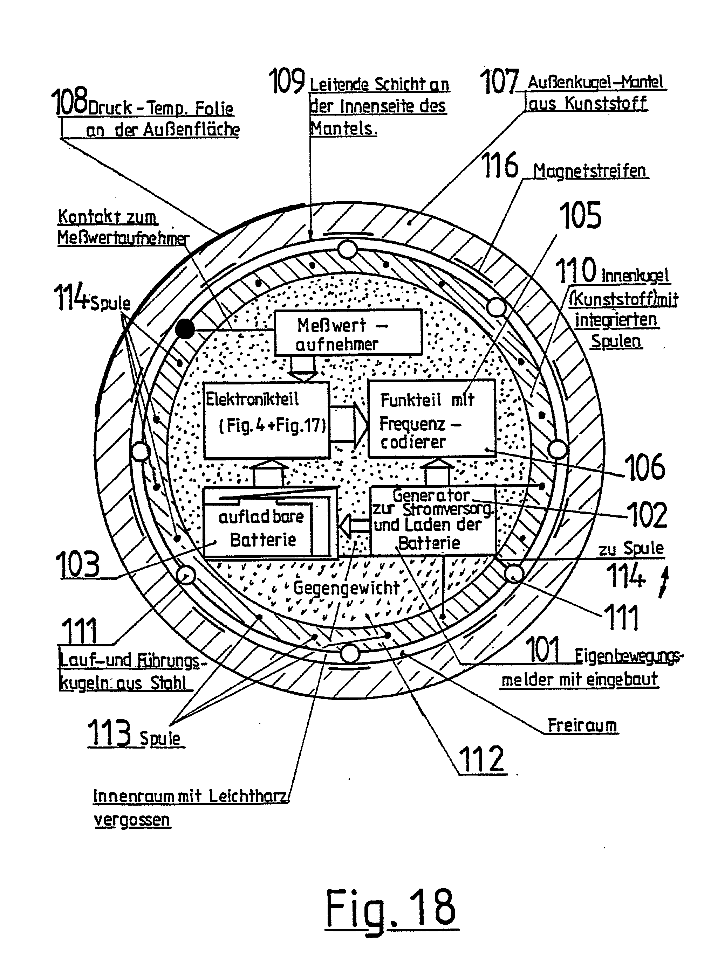

Fig. 17 stellt ein etwas ergänztes Blockschatbild für den Fühler 5 dar: zusätzlich zu dem Eigenbewegungsfühler 101 ist ein Generator 102 vorgesehen, der zum Laden der Batterie 103 dient. Außerdem ist zwischen der Schnittstelle 104 und der Funkschnittstelle 105 ein Frequenzcodierer 106 vorgesehen, wodurch die anfallenden Daten fahrzeugspezifisch erfaßt und verarbeitet werden können.

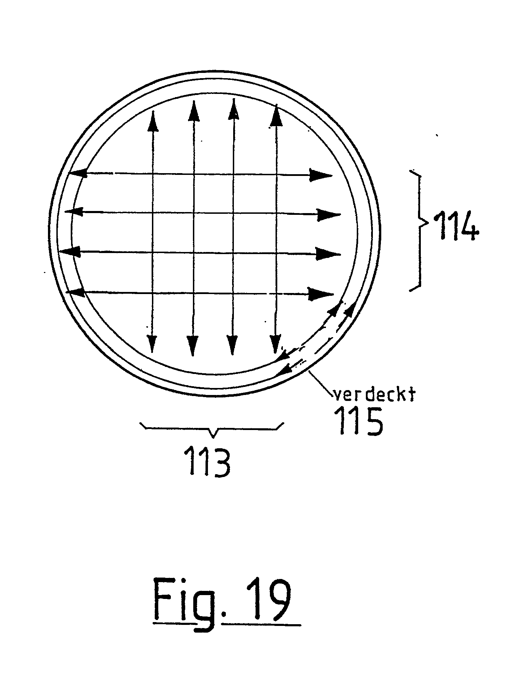

Fig. 18 zeigt den als Kugel ausgebildeten Fühler 5 im Detail. Fig. 19 zeigt die prinzipielle Anordnung der Spulen gemäß Fig. 18.

Der kugelförmige Fühler 5 hat einen Außenmantel 107, der z.B. aus Kunststoff besteht. An der Außenfläche ist eine Druck-Temperatur-Meßfolie 108 angebracht. Die Innenseite des Außenmantels 107 ist mit einer elektrisch leitenden Schicht 109 versehen, die mit der Druck-Temperatur-Meßfolie 108 in Kontakt steht. Die Innenkugel 110 ist über Rollen 111 in dem Außenmantel 107 drehbar gelagert. Die Innenkugel 110 hat ein Gegengewicht 112, wodurch die Innenkugel immer senkrecht stehen bleibt, auch wenn sich der Außenmantel 107 bewegt. Zur Erfassung bzw. Übermittlung der gemessenen Werte dienen die Spulen 113, 114 und 115 sowie die Magnetstreifen 116. Die Anordnung der verschiedenen Spulen ergibt sich schematisch aus Fig. 19.

Der Adress-Dipschalter 117 (Fig. 17) ist zur Bestimmung der einzelnen Meßorte vorgesehen, d.h. in welchem Rad sich die Kugel 5 befindet, z.B. vorne links, hinten rechts etc..

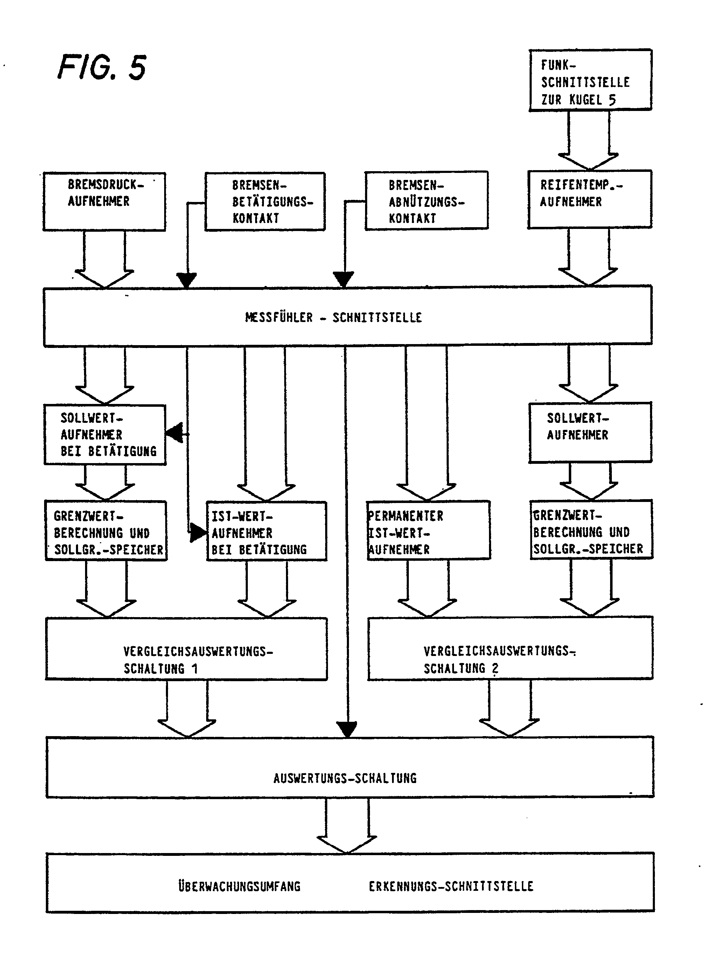

Die Bremsfunktionsüberwachung 8 (Fig. 1) ist in Fig. 5 in Einzelheiten fargestellt. Eine wesentlich benötigte Information ist die von dem als Kugel ausgebildeten Fühler 5 gemeldete Temperatur des Reifens, die u.a. von dem Bremssystem beeinflußt wird; beispielsweise erhöht sich die Reifentemperatur bie sich nicht völlig lösender oder gar festsitzender Bremse, und aus dieser Information können die notwendigen Konsequenzen gezogen werden, wie das in Fig. 1 über die Konsequenzsteuerung 10 beispielsweise mit den Maßnahmen 11 und 12 sowie der Fahrtenbuchsteuerung 13 angedeutet ist.

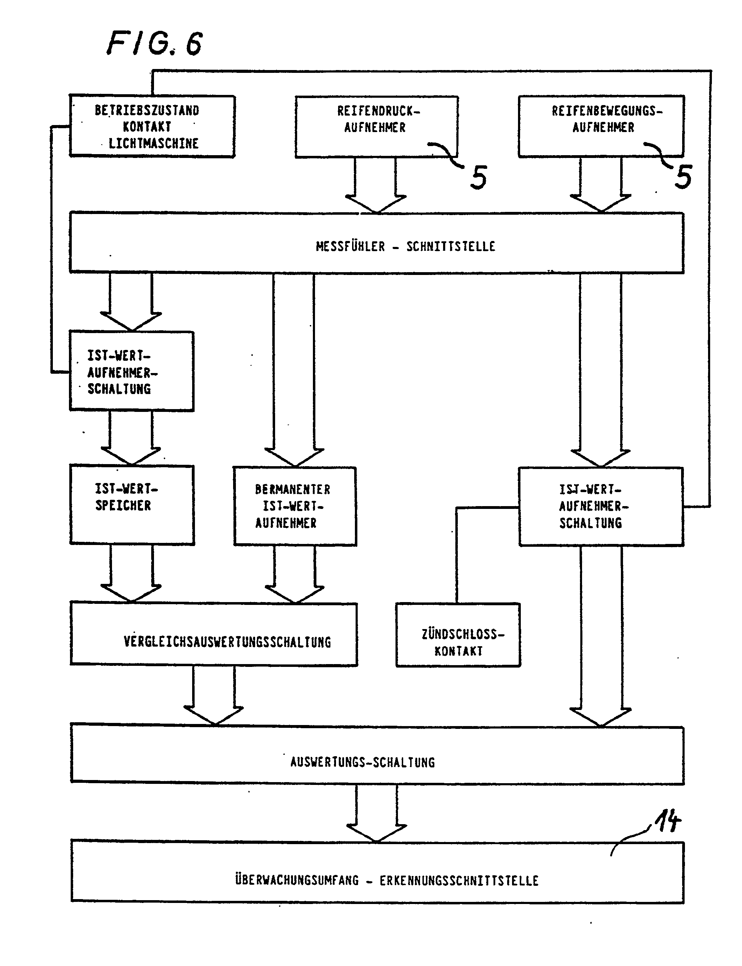

In Fig. 6 ist dargestellt, wie im einzelnen-mit Hilfe der von dem als Kugel ausgebildeten Fühler 5, der sich in den Reifen befindet, gelieferten Informationen/Signale "Reifendruck" und "Eigenbewegung" die Überwachung des Reifendrucks und der Ladung erfolgt. Wie in Fig. 1 sind die beiden von dem kugelförmigen Fühler kommenden Signale mit 5 bezeichnet, und Fig. 6 endet mit der Überwachungsumfang-Erkennungsschnittstelle 14 (siehe auch Fig. 1).

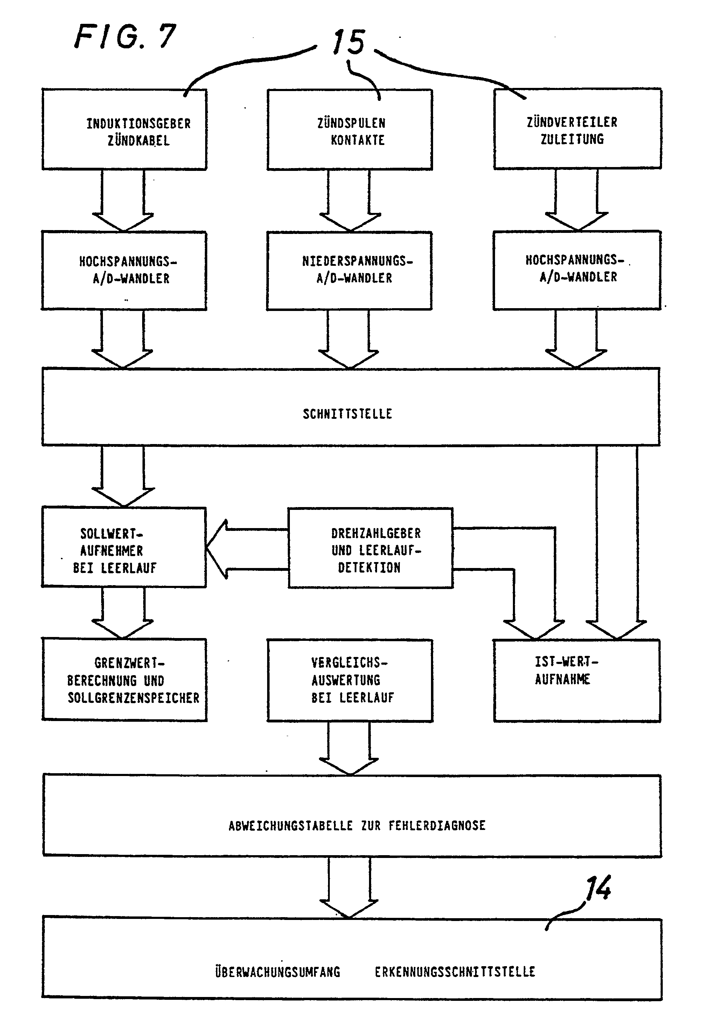

Wie Fig. 1 bei 15 und 16 zeigt, kann u.a. auch das Zündsystem und die Lichtmaschine überwacht und ggf. gesteuert das Notwendige veranlaßt werden. In Fig. 7 ist dargestellt, wie das im einzelnen geschehen kann, indem die von den Zündkabeln, den Zündspulenkontakten und der Zündverteilerzuleitung kommenden Informationen aufbereitet, verarbeitet und daraus die erforderlichen Konsequenzen gezogen werden.

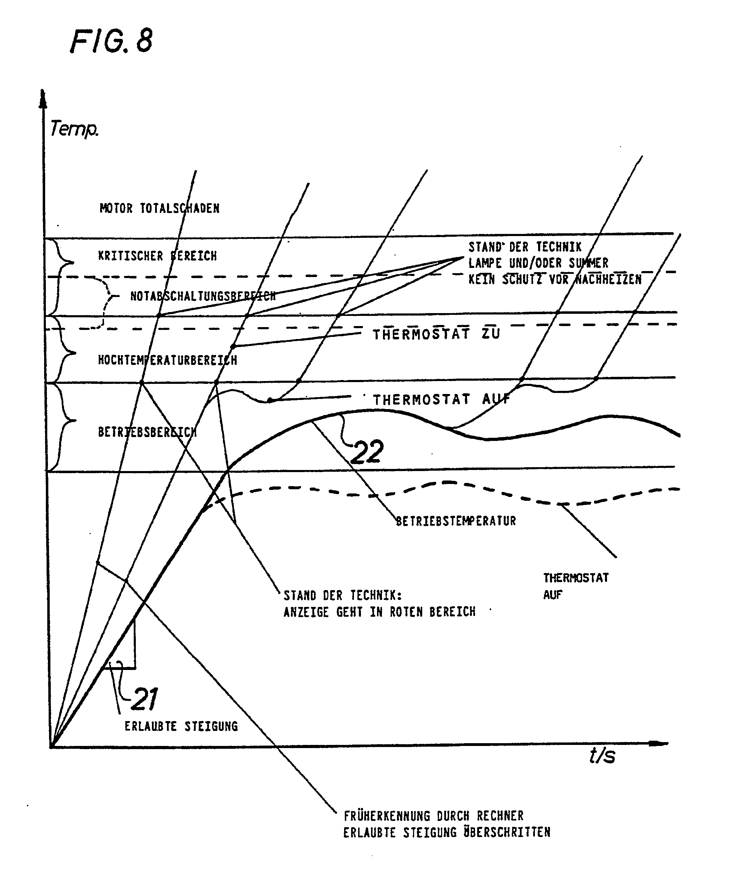

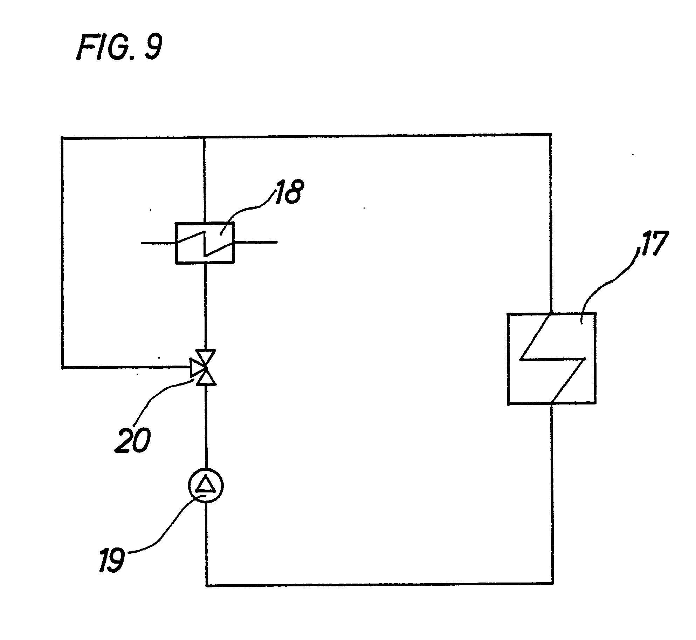

Anhand der Fig. 8 und 9 ist veranschaulicht, wie die erfindungsgemäße gesteuerte Beeinflussung der Betriebsweise, beispielsweise beim Kühlkreislauf, erfolgt. In Fig. 9 ist der Motor mit 17, der Kühler mit 18 und die Wasserpumpe mit 19 bezeichnet. 20 ist ein Thermostat. - Gemäß Fig. 8 wird eine erlaubte Steigung 21 vorgegeben. Beim Stand der Technik wird z.B. die Anzeige der Kühlwassertemperatur in den (roten) Gefahren-Bereich gehen, sonst geschieht nichts. Oder eine Warnlampe bzw. ein Summer wird eingeschaltet, und es ist dem Fahrer überlassen, etwas zu veranlassen. Dagegen wird bei der Erfindung gesteuert z.B. eine Notabschaltung durchgeführt, wenn die normale Betriebstemperatur (dick ausgezogene Kurve (22) sich in unerwünschter Weise verändert. Auch erlaubt die Einrichtung nach der Erfindung eine Früherkennung, wenn - aus welchem Grund auch immer - schon beim Warmlaufen des Motors 17 sich die Temperatur im Bereich oberhalb der erlaubten Steigung 21 bewegt.

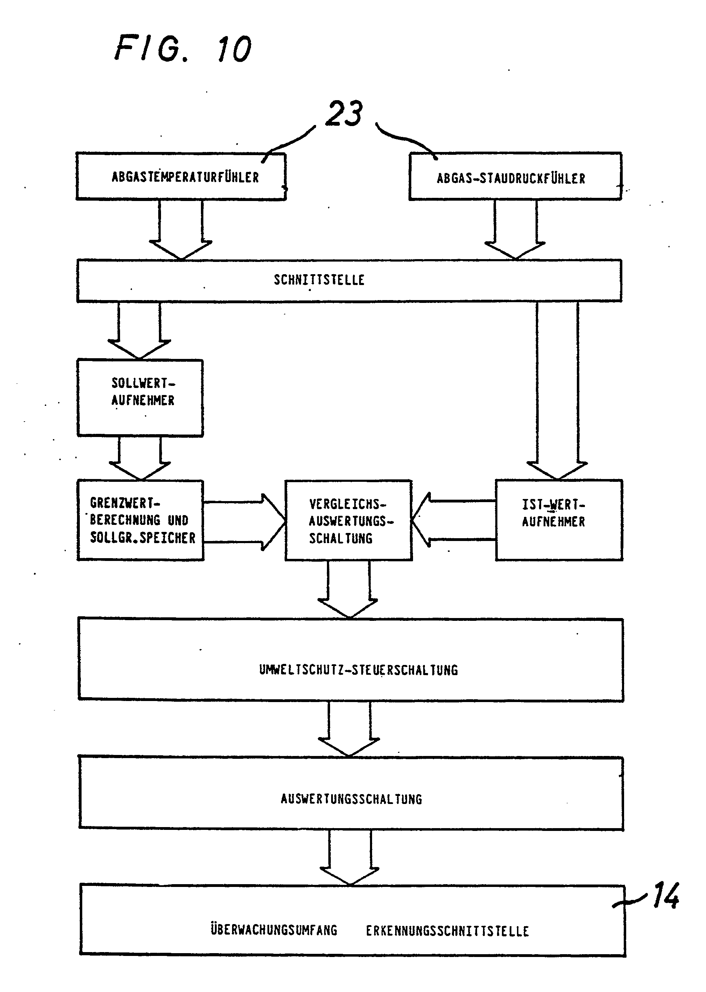

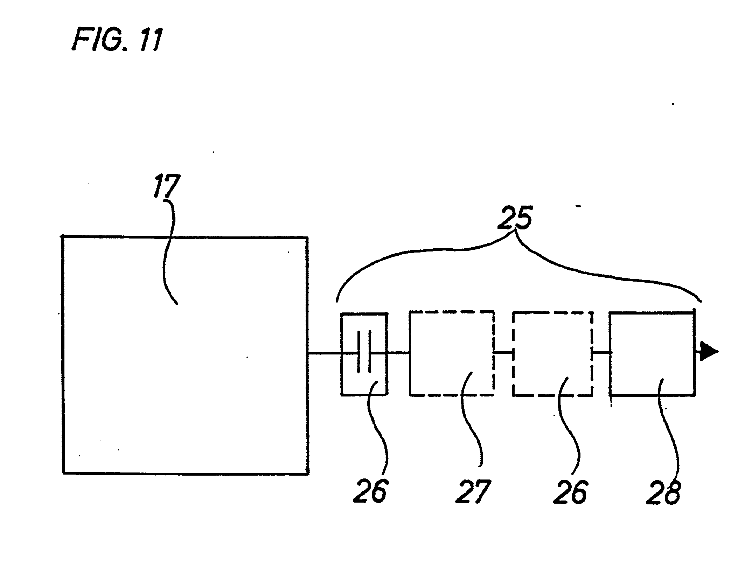

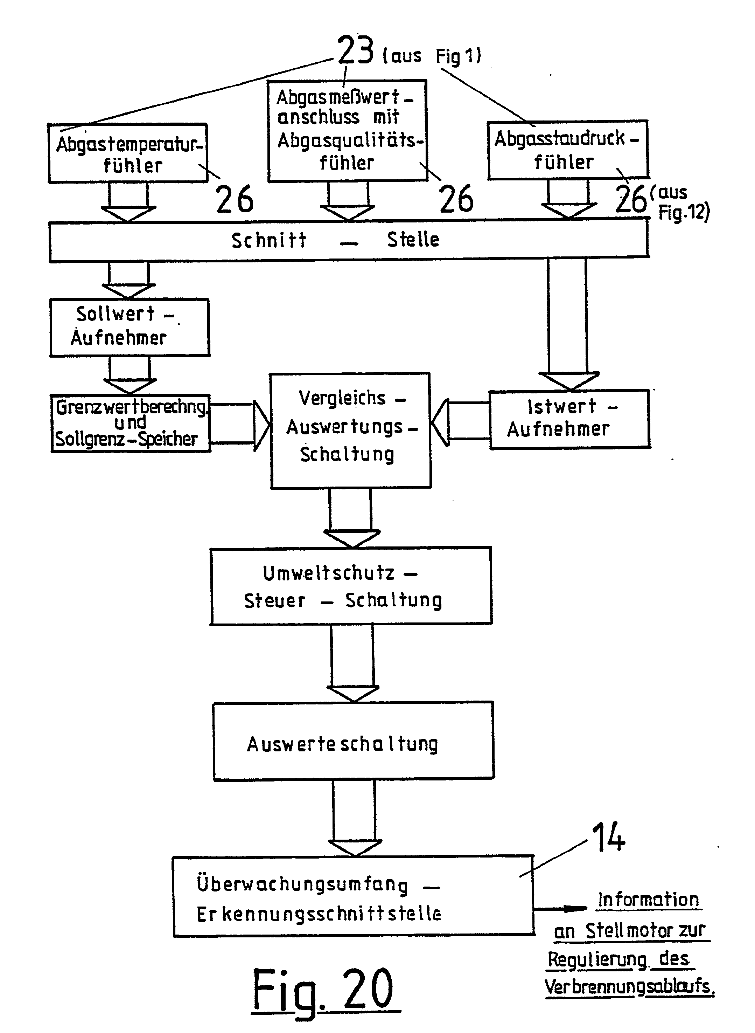

Mit dem System 23/24 in Fig. 1, was in Fig. 10 und 20 detaillierter gezeigt ist, kann eine permanente Abgasüberwachung und ggf. Steuerung der meßgebenden Aggregate erfolgen. Zu diesem Zweck sind in der Auspuffanlage 25 (Fig. 11) ein oder mehrere Fühler 26 für die Abgasqualität vorgesehen. Im Falle eines Dieselmotors 17 kann 27 ein Rußfilter sein, handelt es sich um eine.n Ottomotor 17, so kann 27 ein Katalysator sein. Der Fühler 26 für die Qualität des Abgases kanndirekt dem Motor 17 nachgeschaltet, aber auch nach dem Rußfilter bzw. Katalysator 27 angeordnet sein, vor dem Schalldämpfer 28.

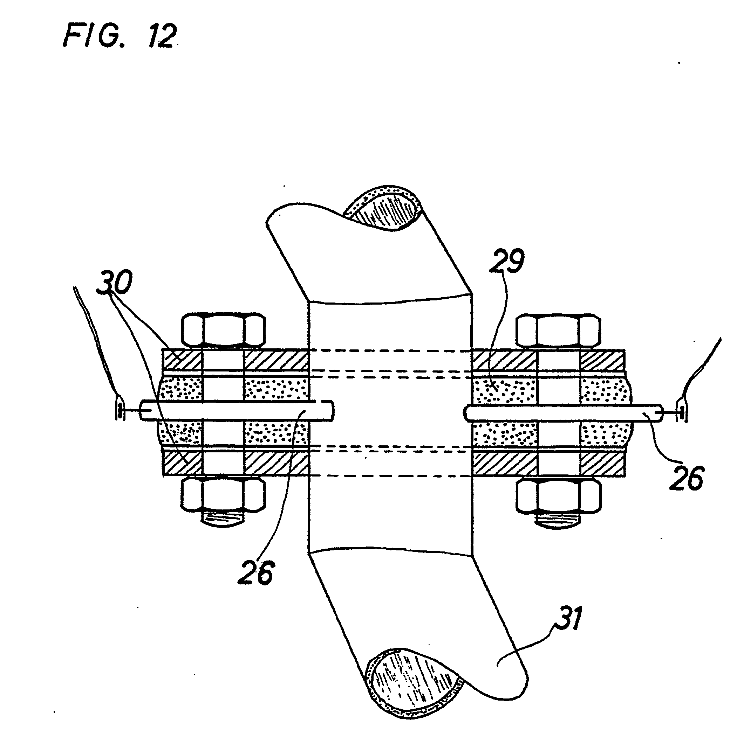

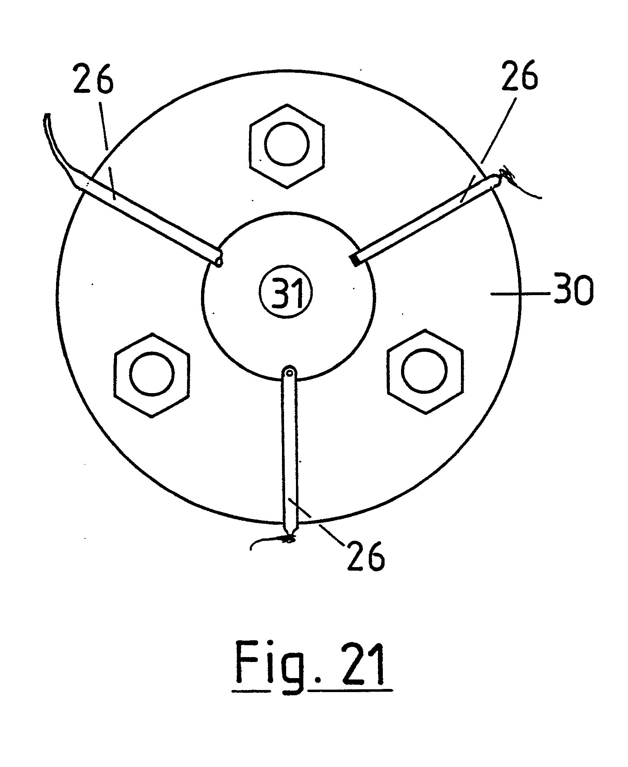

Besonders vorteilhaft können die Fühler 26 für die Abgasqualität in einer Dichtung 29 in Flanschen 30 in der Auspuffanlage 25 angeordnet sein (Fig. 12 und die Draufsicht dazu in Fig. 21). Auf diese Weise sind die Fühler 26 erschütterungsarm untergebracht und sie befinden sich an Stellen (Flansche 30), an denen sowieso das Auspuffrohr geteilt ist, d.h. es sind keine zusätzlichen Bohrungen in dem Auspuffrohr 31 erforderlich, um die Fühler 26 unterzubringen.

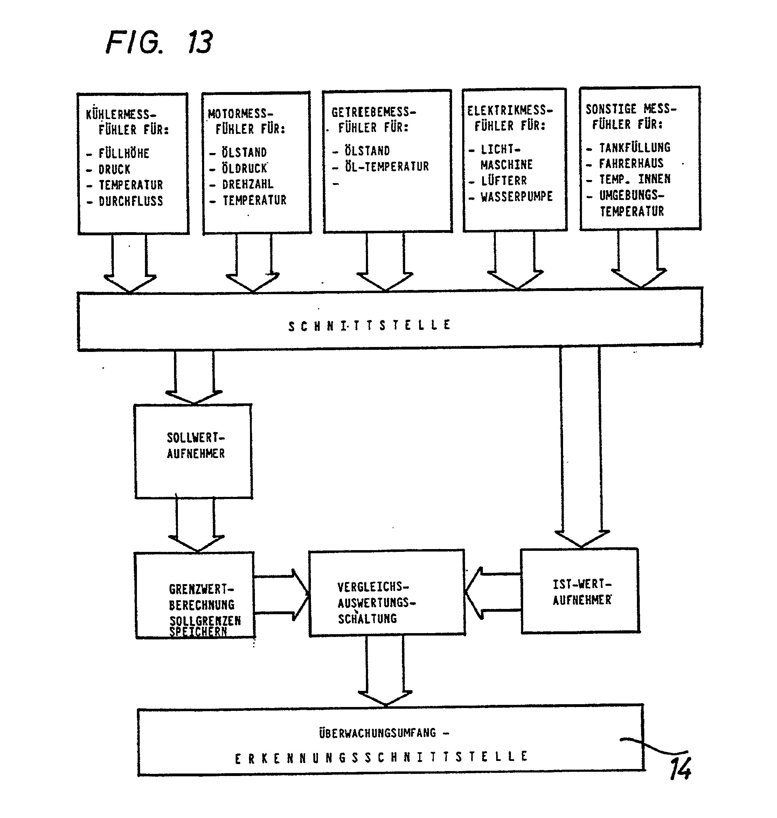

Es können die verschiedensten Aggregate gemäß der Erfindung überwacht werden, wie das in Fig. 1 bei 32 und 33 angedeutet ist. In Fig. 13 ist beispielsweise dargestellt, daß das Kühlsystem, der Motor, das Getriebe, die Elektrik und weitere Aggregate übelwacht und - falls erforderlich - die angemessene Steuerung ausgelöst werden kann.

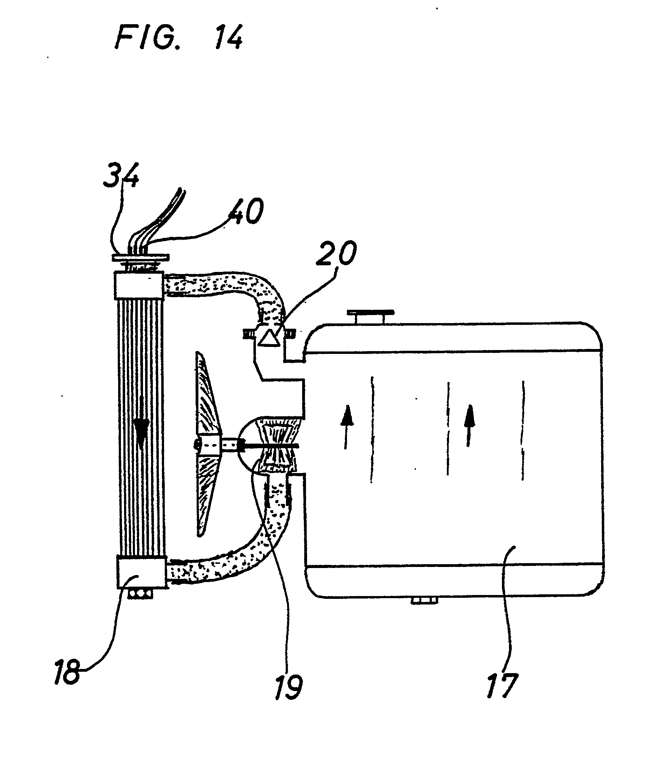

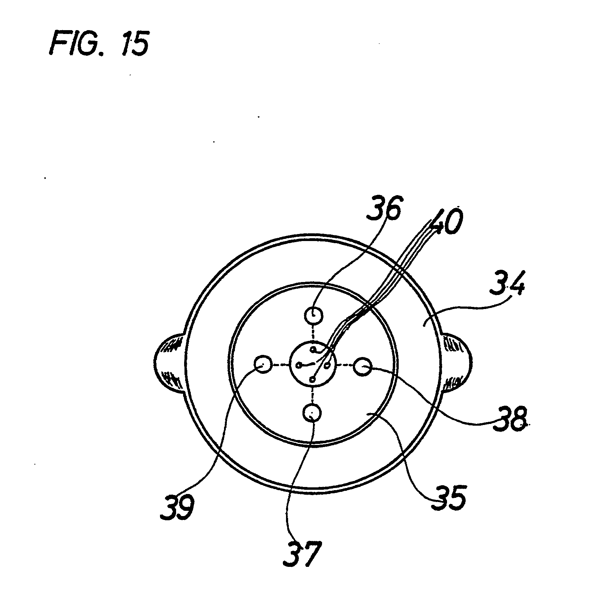

In Fig. 13 ist u.a. aufgezeigt, daß für das.Kühlsystem Meßfühler für die Füllhöhe, die Temperatur und - was von besonderer Bedeutung ist - den Durchfluß sowie den Druck vorgesehen werden können. Fig. 14 zeigt schematisch einen Motor 17 mit Kühler 18, Wasserpumpe 19 und einem Thermostat 20. Der Kühlerdeckel 34 hat einen Einsatz 35 (Fig. 15) der die erforderlichen Meßfühler 36, 37 und 38 für den Wasserstand, den Druck und die Temperaturträgt. Selbstverständlich kann auch der Meßfühler für den Durchfluß in dem Einsatz 35 angeordnet sein (nicht dargestellt). Der Einsatz 35 weist z.B. auch ein Überdruckventil 39 und einen Ausgang 40 für die Meßleitungen der einzelenen Meßfühler auf. Dieser Einsatz 35 nach der Erfindung ist für alle Deckel-Typen verwendbar, so daß nicht jeder Deckel-Typ mit den Meßfühlern und den dazugehörigen Anschlüssen ausgerüstet werden muß. - Es ist natürlich denkbar, die Meßfühler (36,37, 38) unmittelbar, ohne Einsatz 35, in den Deckel 34 einzubauen.

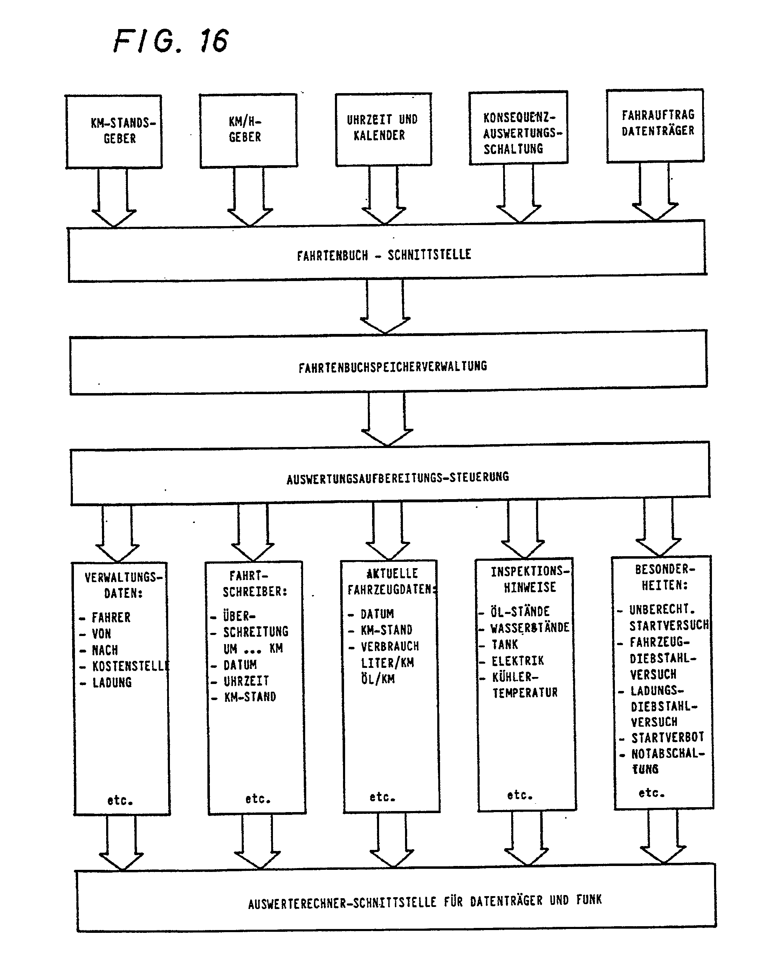

Fig. 1 zeigt, daß die Konsequenzsteuerung 10 die verschiedensten Maßnahmen auslösen kann, u.a. auch die Fahrtenbuchsteuerung 13 mit Funkschnittstelle, d.h. in einer zentralen Einsatzleitung für die Fahrzeuge eines Fuhrparks kann jederzeit festgestellt werden, ob es Probleme mit dem einen oder anderen Fahrzeug gibt. In Fig. 16 ist dargestellt, was alles mit der Fahrtenbuchsteuerung 13 gemeldet, registriert und veranlaßt werden kann.

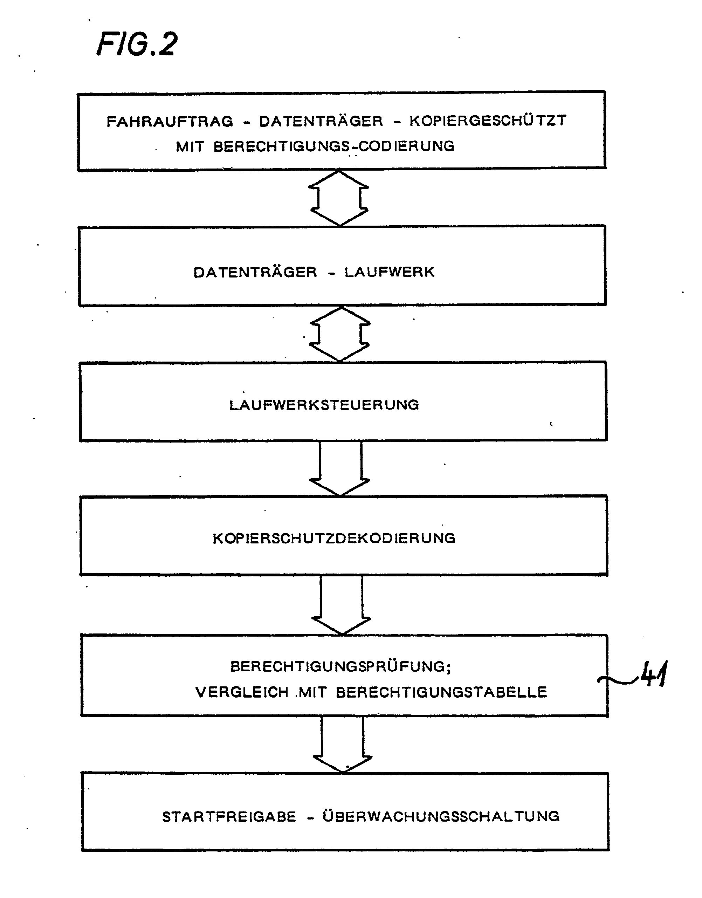

Als Diebstahlschutz für das Fahrzeug und die Ladung wurde beschrieben, daß der als Kugel ausgebildete, in den Reifen lose befindliche Fühler 5 besonders geeignet ist. In Fig. 1 ist auch eine Berechtigungsüberwachung 41 vorgesehen, die in Fig. 2 in Einzelheiten dargestellt ist. Auf diese Weise ist ein zweifacher Diebstahlschutz vorhanden.

Der Prioritätenschalter 42 in Fig. 1 dient dazu, dem Fahrer beibeispielsweise einer ausgelösten Notabschaltung zu ermöglichen, das Fahrzeug noch aus dem Verkehrsstrom an den Fahrbahnrand zu bringen.

## Patentansprüche

1. Einrichtung zum Schutz der Aggregate und der Ladung von Kraftfahrzeugen, wobei eine automatische Überwachung von Betriebszuständen erfolgt, bei der die von Meßfühlern (5) gelieferten Informationen elektronisch aufgearbeitet und zur Beeinflussung einer Konsequenzsteuerung (10) zugeleitet werden, und bei der die Meßfühler (5) als in den Reifen des Kraftfahrzeugs frei bewegliche Kugel mit Funkschnittstelle zum Melden der gemessenen Werte an das Kraftfahrzeug oder eine zentrale Leitstelle ausgebildet sind, **dadurch gekennzeichnet, daß** die kugelförmigen Meßfühler (5) einen Außenmantel (107) aufweisen, in dem unter Zwischenschaltung von Rollen (111) eine Innenkugel (110) drehbar gelagert ist, daß an der Außenfläche des Außenmantels (107) eine Druck-Temperatur-Meßfolie (108) angebracht und die Innenseite des Außenmantels (107) mit einer elektrisch leitenden Schicht (109) versehen ist, die mit der Druck-Temperatur-Meßfolie (108) in Kontakt steht, daß die Innenkugel (110) ein Gegengewicht (112) aufweist und daß zur Übermittlung der für Reifendruck, Temperatur und Eigenbewegung gemessenen Werte über Funk ein Signalverarbeitungsteil (101, 102, 103, 105, 106) vorgesehen ist, dem der Innenkugel (110) zugeordnete Spulen (113, 114, 115) sowie über den Umfang des Außenmantels (107) verteilte Magnetkörper (116) zugeordnet sind.

2. Einrichtung nach Anspruch 1, **dadurch gekennzeichnet**, daß mit Hilfe der gemessenen und über Funk gesendeten Werte eine Fahrtenbuchsteuerung (13), eine Zufuhrunterbrechungs-Steuerung für die Startfreigabe und Notabschaltung (11), eine Anzeigesteuerung (12) und eine Alarmanlagesteuerung (44) auslösbar ist.

3. Einrichtung nach Anspruch 1, **dadurch gekennzeichnet**, daß mittelbar über den Reifendruck das Gewicht der Ladung des Kraftfahrzeugs kontrollierbar und eine Konsequenzsteuerung (10) beeinflußbar ist.

4. Einrichtung nach Anspruch 1, **dadurch gekennzeichnet**, daß mittelbar über die Reifentemperatur die Funktion der bremsen kontrollierbar und eine Konsequenzsteuerung (10) beeinflußbar ist.

5. Einrichtung nach Anspruch 1, **dadurch gekennzeichnet**, daß über die Eigenbewegung des kugelförmigen Fühlers (5) eine Diebstahlssicherung (44) des Kraftfahrzeugs steuerbar ist.

## Claims

1. Device for protecting the systems and load of motor vehicles, there being an automatic monitoring of operating states, in which the information provided by measuring sensors (5) is electronically processed and, for influencing, passed on to a consequence circuit (10), and in which the measuring sensors (5) are designed as spheres which can move freely in the tyres of the motor vehicle and have a radio interface for signalling the measured values to the motor vehicle or a central control point, characterised in that the spherical measuring sensors (5) have an outer jacket (107), in which an inner sphere (110) is mounted rotatably with rollers (111) interposed, in that a pressure-temperature measuring foil (108) is attached to the outer surface of the outer jacket (107) and the inside of the outer jacket (107) is provided with an electrically conducting layer (109), which is in contact with the pressure-temperature measuring foil (108), in that the inner sphere (110) has a counterweight (112) and in that, for transmitting by radio the values measured for tyre pressure, temperature and self-movement, a signal-processing part (101, 102, 103, 105, 106) is provided, assigned to which are coils (113, 114, 115), assigned to the inner sphere (110), as well as magnet bodies (116), distributed over the circumference of the outer jacket (107).

2. Device according to Claim 1, characterised in that, with the aid of the values measured and sent by radio, a log-book control (13), a feed-interruption control for start clearance and emergency shut-down (11), a display control (12) and an alarm system control (44) can be triggered.

3. Device according to Claim 1, characterised in that the tyre pressure can be used indirectly to check the weight of the load of the motor vehicle and to influence a consequence circuit (10).

4. Device according to Claim 1, characterised in that the tyre temperature can be used indirectly to check the function of the brakes and to influence a consequence circuit (10).

5. Device according to Claim 1, characterised in that the self-movement of the spherical sensor (5) can be used to control an anti-theft device (44) of the motor vehicle.

## Revendications

1. Dispositif pour protéger les mécanismes et la charge de véhicules automobiles, dans lequel on met en oeuvre un contrôle automatique d'états de fonctionnement, lors duquel les informations délivrées par des capteurs de mesure (5) sont traitées électroniquement et sont délivrées de manière à influer sur une unité de commande logique (10), et dans lequel les capteurs de mesure (5) sont agencés sous la forme de sphères librement mobiles dans le pneumatique du véhicule et possédant une interface de liaison hertzienne permettant de transmettre les valeurs mesurées au véhicule ou à un poste central de conduite, caractérisé par le fait que les capteurs de mesure de forme sphérique (5) possèdent une enveloppe extérieure (107), dans laquelle une sphère intérieure (110) est montée rotative moyennant le montage intercalé de galets (111), qu'une feuille de mesure (108) de la pression et de la température est disposée sur la surface extérieure de l'enveloppe extérieure (107) et que la surface intérieure de l'enveloppe extérieure (107) est équipée d'une couche électriquement conductrice (109), qui est en contact avec la feuille de mesure (108) de la pression et de la température, que la sphère intérieure (110) possède un contrepoids (112) et que, pour la transmission des valeurs mesurées de la pression du pneumatique, de la température et du déplacement propre, par transmission hertzienne, il est prévu une partie (101,102,103,106) de traitement des signaux, à laquelle sont associées des bobines (113,114,115) associées à la sphère intérieure (110), ainsi que des corps magnétiques (116) répartis sur le pourtour de l'enveloppe extérieure (107).

2. Dispositif suivant la revendication 1, caractérisé par le fait qu'une unité (13) de commande du livre de bord, une unité de commande d'interruption d'alimentation pour l'autorisation de démarrage et un circuit d'interruption d'urgence (11), une unité de commande d'affichage (12) et une unité (44) de commande d'une installation d'alarme peuvent être déclenchées au moyen des valeurs mesurées émises par transmission hertzienne.

3. Dispositif suivant la revendication 1, caractérisé par le fait que le poids de la charge du véhicule automobile peut être contrôlé et une unité de commande logique (10) peut être influencée indirectement par l'intermédiaire de la pression du pneumatique.

4. Dispositif suivant la revendication 1, caractérisé par le fait que le fonctionnement des freins peut être contrôlé et une unité de commande logique (10) peut être influencée indirectement par l'intermédiaire de la température du pneumatique.

5. Dispositif suivant la revendication 1, caractérisé par le fait qu'un dispositif de sécurité antivol (44) du véhicule automobile peut être commandé par l'intermédiaire du déplacement propre du capteur de forme sphérique (5).

## FIG. 1

Block diagram (FIG. 1):

- VERWALTUNGS-UND AUSWERTERECHNER MIT FUNKSCHNITTSTELLE
- DATENTRÄGER
- DATENTRÄGER LESE+SCHR: STEUERUNG
- EIGEN-BEWEGUNG
- FÜHLER-KUGEL — 5
- DRUCK- / TEMP.
- 15 — ZÜND-SYSTEM KONTAKTE
- 23 — ABGAS-MESS-FÜHLER
- 32 — AGGRES.-MESS-FÜHLER
- 2  3  4
- FUNK-SCHNITTSTELLE
- 41 — BERECHTIG. ÜBERWACH.
- 1 — AGGREGAT VORWÄRME-
- 6 — REIFEN-DRUCK-
- 7 — LADUNGS-DRUCK-
- 8 — BREMS-FUNKTION
- 16 — ZÜND.-ÜBERW.
- 24 — UMWELT-SCHUTZÜB
- 33 — AGGRG. RESTÜB.
- STARTFREIGABE-ÜBERWACH.
- AGGREGATÜBERWACHUNG MIT SOLLWERT, ISTWERT- und VERGLEICHSAUSWERTUNGSSCHALTUNG
- 9
- 14 — ÜBERWACHUNGSUMFANG - ERKENNUNGSSCHNITTSTELLE
- 42 — PRIORITÄTS-SCHALTUNG
- BETRIEBS-ZUSTAND
- UHREN-SYNCHRON.
- GLEICHZEITIG AUFTR: FEHLER ERKENNUNGSSCHALTUNG
- 10 — KONSEQUENZSTEUERUNG
- FAHRTENBUCH-STEUERUNG MIT FUNKSCHNITT-STELLE — 13
- ZUFUHRUNTER-BRECHUNGS-STEUERUNG FÜR STARTFREI-GABE UND NOTABSCHALTUNG — 11
- ANZEIGE-STEUERUNG - INSPEKTION - WARNUNG - BEGRÜNDUNG — 12
- ALARMANLAGE STEUERUNG ZUM DIEBSTAHL-SCHUTZ VON FAHRZEUG UND LADUNG — 44
- AGGREGAT-VORWÄRME-STEUERUNG — 43
- Zur Datenträger-steuerung

## FIG.2

```
┌─────────────────────────────────────────────────┐
│  FAHRAUFTRAG - DATENTRÄGER - KOPIERGESCHÜTZT      │
│          MIT BERECHTIGUNGS-CODIERUNG              │
└─────────────────────────────────────────────────┘
                        ⇕
┌─────────────────────────────────────────────────┐
│            DATENTRÄGER - LAUFWERK                 │
└─────────────────────────────────────────────────┘
                        ⇕
┌─────────────────────────────────────────────────┐
│              LAUFWERKSTEUERUNG                    │
└─────────────────────────────────────────────────┘
                        ⇓
┌─────────────────────────────────────────────────┐
│            KOPIERSCHUTZDEKODIERUNG               │
└─────────────────────────────────────────────────┘
                        ⇓
┌─────────────────────────────────────────────────┐
│            BERECHTIGUNGSPRÜFUNG;                  │    ~41
│   VERGLEICH .MIT BERECHTIGUNGSTABELLE            │
└─────────────────────────────────────────────────┘
                        ⇓
┌─────────────────────────────────────────────────┐
│     STARTFREIGABE - ÜBERWACHUNGSSCHALTUNG        │
└─────────────────────────────────────────────────┘
```

# FIG. 3

Block diagram showing: **UMGEBUNGS-TEMPERATUR FÜHLER** (2), **KÜHLER-TEMPERATUR FÜHLER** (3), and **BETRIEBS-ZUSTANDS-KONTAKT** (4) feeding into **MESSFÜHLER - SCHNITTSTELLE**, which connects to **GRENZTEMPERATUR - ÜBERWACHUNGSSTEUERUNG**. **UHRZEIT** feeds into the latter. This connects to **STARTFREIGABE - ÜBERWACHUNGSSCHALTUNG**, then to **ÜBERWACHUNGSUMFANG - ERKENNUNGSSCHNITTSTELLE** (14).

# FIG.4

5

| DRUCK-<br>MESSFÜHLER | TEMPERATUR-<br>MESSFÜHLER | ADR.-<br>DIP-<br>SCHAL | EIGENBEWEGUNGS-<br>MESSFÜHLER |

SCHNITTSTELLE MIT A/D - WANDLER

| C P U | | BATTERIE |

| SYSTEM-<br>SPEICHER | | DATEN-<br>SPEICHER |

SCHNITTSTELLE MIT D/A UND A/D - WANDLER

FUNK - SCHNITTSTELLE

# FIG. 5

```
                                                          ┌─────────────┐
                                                          │ FUNK-       │
                                                          │ SCHNITTSTELLE│
                                                          │ ZUR KUGEL 5 │
                                                          └─────────────┘
                                                                 │
                                                                 ▼
┌─────────────┐  ┌─────────────┐      ┌─────────────┐     ┌─────────────┐
│ BREMSDRUCK- │  │ BREMSEN-    │      │ BREMSEN-    │     │ REIFENTEMP.-│
│ AUFNEHMER   │  │ BETÄTIGUNGS-│      │ ABNÜTZUNGS- │     │ AUFNEHMER   │
│             │  │ KONTAKT     │      │ KONTAKT     │     │             │
└─────────────┘  └─────────────┘      └─────────────┘     └─────────────┘
        │              │                     │                   │
        ▼              ▼                     ▼                   ▼
┌──────────────────────────────────────────────────────────────────────┐
│                    MESSFÜHLER - SCHNITTSTELLE                          │
└──────────────────────────────────────────────────────────────────────┘
        │                                                          │
        ▼                                                          ▼
┌─────────────┐                                            ┌─────────────┐
│ SOLLWERT-   │◄──                                         │ SOLLWERT-   │
│ AUFNEHMER   │                                            │ AUFNEHMER   │
│ BEI BETÄTIGUNG│                                          │             │
└─────────────┘                                            └─────────────┘
        │                                                          │
        ▼                                                          ▼
┌─────────────┐  ┌─────────────┐   ┌─────────────┐          ┌─────────────┐
│ GRENZWERT-  │  │ IST-WERT-   │   │ PERMANENTER │          │ GRENZWERT-  │
│ BERECHNUNG UND│►│ AUFNEHMER   │   │ IST-WERT-   │          │ BERECHNUNG UND│
│ SOLLGR.-SPEICHER│ BEI BETÄTIGUNG│ │ AUFNEHMER   │          │ SOLLGR.-SPEICHER│
└─────────────┘  └─────────────┘   └─────────────┘          └─────────────┘
        │              │                   │                       │
        ▼              ▼                   │                       ▼
┌──────────────────────────────┐          │          ┌──────────────────────────────┐
│ VERGLEICHSAUSWERTUNGS-        │          │          │ VERGLEICHSAUSWERTUNGS-        │
│ SCHALTUNG 1                   │          │          │ SCHALTUNG 2                   │
└──────────────────────────────┘          │          └──────────────────────────────┘
              │                            │                        │
              ▼                            ▼                        ▼
┌──────────────────────────────────────────────────────────────────────┐
│                      AUSWERTUNGS-SCHALTUNG                             │
└──────────────────────────────────────────────────────────────────────┘
                                  │
                                  ▼
┌──────────────────────────────────────────────────────────────────────┐
│  ÜBERWACHUNGSUMFANG        ERKENNUNGS-SCHNITTSTELLE                    │
└──────────────────────────────────────────────────────────────────────┘
```

## FIG. 6

```
┌─────────────────┐     ┌─────────────────┐     ┌─────────────────┐
│  BETRIEBSZUSTAND │     │   REIFENDRUCK-  │     │ REIFENBEWEGUNGS-│
│     KONTAKT      │     │    AUFNEHMER    │     │    AUFNEHMER    │
│   LICHTMASCHINE  │     │                 │     │                 │
└─────────────────┘     └─────────────────┘  5  └─────────────────┘  5
```

MESSFÜHLER - SCHNITTSTELLE

IST-WERT-
AUFNEHMER-
SCHALTUNG

IST-WERT-
SPEICHER

BERMANENTER
IST-WERT-
AUFNEHMER

IST-WERT-
AUFNEHMER-
SCHALTUNG

VERGLEICHSAUSWERTUNGSSCHALTUNG

ZÜNDSCHLOSS-
KONTAKT

AUSWERTUNGS-SCHALTUNG

14

ÜBERWACHUNGSUMFANG - ERKENNUNGSSCHNITTSTELLE

## FIG. 7

*15*

```
┌──────────────────┐    ┌──────────────────┐    ┌──────────────────┐
│  INDUKTIONSGEBER  │    │    ZÜNDSPULEN     │    │  ZÜNDVERTEILER    │
│    ZÜNDKABEL      │    │    KONTAKTE       │    │   ZULEITUNG       │
└──────────────────┘    └──────────────────┘    └──────────────────┘
          │                       │                       │
          ▼                       ▼                       ▼
┌──────────────────┐    ┌──────────────────┐    ┌──────────────────┐
│  HOCHSPANNUNGS-   │    │  NIEDERSPANNUNGS- │    │  HOCHSPANNUNGS-   │
│   A/D-WANDLER     │    │    A/D-WANDLER    │    │   A/D-WANDLER     │
└──────────────────┘    └──────────────────┘    └──────────────────┘
          │                       │                       │
          ▼                       ▼                       ▼
┌───────────────────────────────────────────────────────────────────┐
│                           SCHNITTSTELLE                             │
└───────────────────────────────────────────────────────────────────┘
          │
          ▼
┌──────────────────┐    ┌──────────────────┐
│    SOLLWERT-      │◄───│  DREHZAHLGEBER    │
│    AUFNEHMER      │    │  UND LEERLAUF-    │
│   BEI LEERLAUF    │    │   DETEKTION       │
└──────────────────┘    └──────────────────┘
          │                                          │
          ▼                                          ▼
┌──────────────────┐    ┌──────────────────┐    ┌──────────────────┐
│   GRENZWERT-      │    │   VERGLEICHS-     │    │    IST-WERT-      │
│ BERECHNUNG UND    │    │   AUSWERTUNG      │    │    AUFNAHME       │
│ SOLLGRENZENSPEICHER│   │  BEI LEERLAUF     │    │                   │
└──────────────────┘    └──────────────────┘    └──────────────────┘
                                  │
                                  ▼
┌───────────────────────────────────────────────────────────────────┐
│            ABWEICHUNGSTABELLE ZUR FEHLERDIAGNOSE                    │
└───────────────────────────────────────────────────────────────────┘
                                  │
                                  ▼                              *14*
┌───────────────────────────────────────────────────────────────────┐
│   ÜBERWACHUNGSUMFANG        ERKENNUNGSSCHNITTSTELLE                 │
└───────────────────────────────────────────────────────────────────┘
```

# FIG. 8

**Temp.**

MOTOR TOTALSCHADEN

KRITISCHER BEREICH

STAND DER TECHNIK
LAMPE UND/ODER SUMMER
KEIN SCHUTZ VOR NACHHEIZEN

NOTABSCHALTUNGSBEREICH

THERMOSTAT ZU

HOCHTEMPERATURBEREICH

THERMOSTAT AUF

BETRIEBSBEREICH

22

BETRIEBSTEMPERATUR

THERMOSTAT
AUF

STAND DER TECHNIK:
ANZEIGE GEHT IN ROTEN BEREICH

21

ERLAUBTE STEIGUNG

t/s

FRÜHERKENNUNG DURCH RECHNER
ERLAUBTE STEIGUNG ÜBERSCHRITTEN

FIG. 9

# FIG. 10

23

| ABGASTEMPERATURFÜHLER | ABGAS-STAUDRUCKFÜHLER |
|---|---|

SCHNITTSTELLE

SOLLWERT-
AUFNEHMER

| GRENZWERT-
BERECHNUNG UND
SOLLGR.SPEICHER | VERGLEICHS-
AUSWERTUNGS-
SCHALTUNG | IST-WERT-
AUFNEHMER |
|---|---|---|

UMWELTSCHUTZ-STEUERSCHALTUNG

AUSWERTUNGSSCHALTUNG

14

ÜBERWACHUNGSUMFANG     ERKENNUNGSSCHNITTSTELLE

FIG. 11

## FIG. 12

## FIG. 13

```
┌─────────────────┐  ┌─────────────────┐  ┌─────────────────┐  ┌─────────────────┐  ┌─────────────────┐
│ KÜHLERMESS-     │  │ MOTORMESS-      │  │ GETREEBEMESS-   │  │ ELEKTRIKMESS-   │  │ SONSTIGE MESS-  │
│    FÜHLER FÜR:  │  │    FÜHLER FÜR:  │  │  FÜHLER FÜR:    │  │    FÜHLER FÜR:  │  │    FÜHLER FÜR:  │
│                 │  │                 │  │                 │  │                 │  │                 │
│ - FÜLLHÖHE      │  │ - ÖLSTAND       │  │ - ÖLSTAND       │  │ - LICHT-        │  │ - TANKFÜLLUNG   │
│ - DRUCK         │  │ - ÖLDRUCK       │  │ - ÖL-TEMPERATUR │  │   MASCHINE      │  │ - FAHRERHAUS    │
│ - TEMPERATUR    │  │ - DREHZAHL      │  │ -               │  │ - LÜFTERR       │  │ - TEMP. INNEN   │
│ - DURCHFLUSS    │  │ - TEMPERATUR    │  │                 │  │ - WASSERPUMPE   │  │ - UMGEBUNGS-    │
│                 │  │                 │  │                 │  │                 │  │   TEMPERATUR    │
└─────────────────┘  └─────────────────┘  └─────────────────┘  └─────────────────┘  └─────────────────┘
```

SCHNITTSTELLE

SOLLWERT-
AUFNEHMER

GRENZWERT-
BERECHNUNG
SOLLGRENZEN
SPEICHERN

VERGLEICHS-
AUSWERTUNGS-
SCHALTUNG

IST-WERT-
AUFNEHMER

ÜBERWACHUNGSUMFANG –

E R K E N N U N G S S C H N I T T S T E L L E

14

FIG. 14

FIG. 15

## FIG. 16

```
┌──────────────┐  ┌──────────┐  ┌──────────────┐  ┌──────────────┐  ┌──────────────┐
│ KM-STANDS-   │  │ KM/H-    │  │ UHRZEIT UND  │  │ KONSEQUENZ-  │  │ FAHRAUFTRAG  │
│ GEBER        │  │ GEBER    │  │ KALENDER     │  │ AUSWERTUNGS- │  │ DATENTRÄGER  │
│              │  │          │  │              │  │ SCHALTUNG    │  │              │
└──────────────┘  └──────────┘  └──────────────┘  └──────────────┘  └──────────────┘
```

FAHRTENBUCH - SCHNITTSTELLE

FAHRTENBUCHSPEICHERVERWALTUNG

AUSWERTUNGSAUFBEREITUNGS-STEUERUNG

| VERWALTUNGS-DATEN: | FAHRT-SCHREIBER: | AKTUELLE FAHRZEUGDATEN: | INSPEKTIONS-HINWEISE | BESONDER-HEITEN: |
|---|---|---|---|---|
| – FAHRER | – ÜBER- | – DATUM | – ÖL-STÄNDE | – UNBERECHT. STARTVERSUCH |
| – VON | – SCHREITUNG | – KM-STAND | – WASSERSTÄNDE | – FAHRZEUG-DIEBSTAHL-VERSUCH |
| – NACH | UM ... KM | – VERBRAUCH | – TANK | |
| – KOSTENSTELLE | – DATUM | LITER/KM | – ELEKTRIK | – LADUNGS-DIEBSTAHL-VERSUCH |
| – LADUNG | – UHRZEIT | ÖL/KM | – KÜHLER-TEMPERATUR | |
| | – KM-STAND | | | – STARTVERBOT |
| | | | | – NOTABSCHAL-TUNG |
| etc. | etc. | etc. | etc. | etc. |

AUSWERTERECHNER-SCHNITTSTELLE FÜR DATENTRÄGER UND FUNK

5

108

DRUCK - Messfühler

Temperatur- Messfühler

102

Minigenerator mit Eigenbewegungsrnessfühler

101

Adress - dipschalter

117

Schnittstelle mit A/D Wandler

CPU

103

aufladbare Knopfbatterie

System - Speicher

Daten Speicher

104

Schnittstelle mit A/D und D/A Wandler

106

Frequenzcodierer

105

Funk - Schnittstelle

## Fig. 17

108 Druck - Temp. Folie an der Außenfläche

109 Leitende Schicht an der Innenseite des Mantels.

107 Außenkugel-Mantel aus Kunststoff

116 Magnetstreifen

105

Kontakt zum Meßwertaufnehmer

110 Innenkugel (Kunststoff)mit integrierten Spulen

114 Spule

Meßwert - aufnehmer

Elektronikteil (Fig.4+Fig.17)

Funkteil mit Frequenz - codierer

106

102

aufladbare Batterie

Generator zur Stromversorg. und Laden der Batterie

zu Spule 114

103

Gegengewicht

111

111 Lauf-und Führungs-kugeln aus Stahl

101 Eigenbewegungs-melder mit eingebaut

113 Spule

Freiraum

112

Innenraum mit Leichtharz vergossen

Fig. 18

114

verdeckt
115

113

## Fig. 19

23 (aus Fig 1)

| Abgastemperatur-fühler | Abgasmeßwert-anschluss mit Abgasqualitäts-fühler | Abgasstaudruck-fühler |

26                    26                    26 (aus Fig.12)

Schnitt — Stelle

Sollwert – Aufnehmer

Grenzwertberechng. und Sollgrenz–Speicher

Vergleichs – Auswertungs– Schaltung

Istwert – Aufnehmer

Umweltschutz – Steuer – Schaltung

Auswerteschaltung

14

Überwachungsumfang – Erkennungsschnittstelle

Information an Stellmotor zur Regulierung des Verbrennungsablaufs.

# Fig. 20

**Fig. 21**